**Europäisches Patentamt**

(19) **European Patent Office**

**Office européen des brevets**

(11) Veröffentlichungsnummer: **0 066 093**
**B1**

(12) # EUROPÄISCHE PATENTSCHRIFT

(45) Veröffentlichungstag der Patentschrift:
06.03.85

(51) Int. Cl.⁴: **A 01 K 31/06**

(21) Anmeldenummer: **82103594.6**

(22) Anmeldetag: **28.04.82**

(54) **Vogel-Badehaus.**

(30) Priorität: **03.06.81 DE 8116459 U**
**11.03.82 DE 8206785 U**

(43) Veröffentlichungstag der Anmeldung:
**08.12.82 Patentblatt 82/49**

(45) Bekanntmachung des Hinweises auf die Patenterteilung:
**06.03.85 Patentblatt 85/10**

(84) Benannte Vertragsstaaten:
**AT BE CH DE FR GB IT LI NL SE**

(56) Entgegenhaltungen:
**DE - U - 1 927 859**
**GB - A - 774 557**

(73) Patentinhaber: **Ellerstorfer, Herbert, Flurstrasse 18,**
**D-8501 Eckenhald (DE)**

(72) Erfinder: **Ellerstorfer, Herbert, Flurstrasse 18,**
**D-8501 Eckenhald (DE)**

(74) Vertreter: **Böhme, Volker, Dr. et al, Patentanwälte Dr.**
**Böhme, Kessel, Böhme Frauentorgraben 73,**
**D-8500 Nürnberg (DE)**

## Beschreibung

Die Erfindung betrifft ein Vogel-Badehaus, das an der mit der Durchlaß-Öffnung versehenen Vorderseite Haken zum Anhängen an einem Käfig aufweist und bei dem ein Dachteil auf ein Wannenteil aufgesetzt ist.

Bei einem bekannten (GB-A-774 557) Vogel-Badehaus dieser Art sind die Haken zum Aufhängen oberhalb der Durchlaß-Öffnung am Dachteil vorgesehen, verlaufen ein Führungssteg und die Mittelebene einer Führungsnut in vertikaler Richtung und ragen Rastnasen einer Rasteinrichtung in waagerechter Richtung von einer Innenflanke der Führungsnut weg durch Durchbrechungen des Führungssteges. Hierbei muß das gesamte Badehaus vom Käfig abgenommen werden, damit das Wannenteil gereinigt oder sonstwie gewartet werden kann, und macht es Schwierigkeiten, die kräftigen Rastnasen aus den Rastausnehmungen zu drücken, um das Dachteil vom Wannenteil abzuziehen, wobei die Rasteinrichtung kräftig ausgebildet ist, da sie Wannenteil und Dachteil auch gegen Zug in vertikaler Richtung zusammenhalten muß.

Eine Aufgabe der Erfindung ist es somit, ein Vogel-Badehaus der eingangs genannten Art zu schaffen, bei dem sich der Dachteil leicht und einfach vom Wannenteil abziehen läßt, ohne den Wannenteil vom Käfig abzunehmen. Die Erfindung sieht, diese Aufgabe lösend, ein Vogel-Badehaus vor, das dadurch gekennzeichnet ist, daß das Dachteil mit beidseitiger Führungsnut auf beidseitigem Führungssteg des Wannenteiles von hinten aufgeschoben ist, im Bereich von Führungsnut und Führungssteg eine, Rastausnehmung und Rastnase umfassende Rasteinrichtung vorgesehen ist, die Haken zum Aufhängen unterhalb der Durchlaß-Öffnung am Wannenteil vorgesehen sind, der Führungssteg, samt Führungsnut, in eine seitliche, nach außen weisende Lage umgelegt ist und Rastnase und Rastausnehmung an einer Flachseite des Führungssteges und einer Wandung der Führungsnut oder an der Stirnseite des Führungssteges und dem Grund der Führungsnut vorgesehen sind.

Da der Wannenteil am Käfig angehängt wird, kann er am Käfig bleiben, wenn der Dachteil abgenommen wird. Der Dachteil kann ohne Bruchgefahr für die Haken abgezogen werden. Der Dachteil und der Wannenteil sind mittels des Steges und der Nut gegen Zug in vertikaler Richtung zusammengehalten, weshalb die Rasteinrichtung von dieser Beanspruchung entlastet ist. Nunmehr kann die Rasteinrichtung relativ fein und sanft ansprechend ausgebildet sein, so daß der Dachteil zwar gegen ungewolltes Abziehen sicher ist, aber auch ohne großen Kraftaufwand und ohne manuelles Zurückdrücken von Rastnasen vom Wannenteil abgezogen werden kann.

Besonders zweckmäßig und vorteilhaft ist es, wenn der obere Rand des Wannenteiles rundum in Höhe des unteren Randes der Durchlaß-Öffnung verläuft und die Biegung der Haken den unteren Rand der Durchlaß-Öffnung nach oben überragt. Bei dieser Ausbildung kann die Tür, die zum Verschließen des Käfigfensters vorgesehen ist, geschlossen werden, sobald der Dachteil vom Wannenteil abgezogen ist.

Besonders zweckmäßig und vorteilhaft ist es weiterhin, wenn Führungsnut und Führungssteg sich ununterbrochen über beide Längsseiten und die Rückseite vom Wannenteil und Dachteil erstreckt. Hierdurch wird die Dichtigkeit der Verbindung gegen nach außen dringendes Wasser gefördert.

In der Regel ist der Steg am Wannenteil und die Nut am Dachteil vorgesehen. Besonders zweckmäßig und vorteilhaft ist es dabei, wenn die Wandungen von Dachteil und Wannenteil innen fluchtend ineinander übergehen und eine die Führungsnut bildende Nutrinne die Wandung des Dachteiles nach außen überragt. Nunmehr kann sich der Vogel beim Baden nicht mehr an Kanten oder Vorsprüngen stoßen.

Besonders zweckmäßig und vorteilhaft ist es sodann, wenn die Rastausnehmung im Führungssteg und die Rastnase am Grund der Führungsnut vorgesehen ist oder wenn die Rastnase am Führungssteg und die Rastausnehmung an der Wandung der Führungsnut vorgesehen ist. Bei dieser Ausbildung lassen sich Rastnase und Rasteinrichtung günstig unterbringen.

Besonders zweckmäßig und vorteilhaft ist es auch, wenn an beiden Längsseiten nahe bei der Vorderseite je eine Rasteinrichtung vorgesehen ist. Bei dieser Ausbildung rasten Dachteil und Wannenteil erst kurz vor Abschluß des Aufschiebens ineinander und entrasten beim Abziehen des Dachteiles besonders leicht.

Eine besonders zweckmäßige und vorteilhafte Ausführungsform liegt auch vor, wenn die Haken die Vorderseite des Wannenteiles nach unten überragen und am Wannenteil eine parallel zum Haken nach unten ragende Stützleiste vorgesehen ist. Hierbei ist der Sitz des Wannenteiles am Käfig verbessert und die Gefahr des Brechens der Haken weiter vermindert.

Zwischen den Haken und dem Wannenteil lassen sich über die Länge der Haken erstreckende Simse vorsehen. Diese Simse verringern den freien Abstand zwischen Haken bzw. Sims und Vorderseitenwandung des Wannenteiles und verbessern damit den Sitz des Wannenteiles am Käfig.

Besonders zweckmäßig und vorteilhaft ist es sodann, wenn die Außenseite des Wannenteiles mit einer durch Metallisieren aufgebrachten metallischen dünnen Belagsschicht versehen ist. Hierdurch ist der Wannenteil, der dauerhaft am Käfig sitzt, dem meist metallischen Käfig farblich angepaßt. Der Wannenteil wirkt wie ein Teil des Käfigs.

Bei dem bekannten (GB-PS 774 557) Vogel-Badehaus der eingangs genannten Art sind die beiden Haken mit einem bestimmten Abstand voneinander starr an der Dachteil-Decke befestigt, indem sie mit der Decke einstückig sind.

Der Abstand dieser beiden Haken voneinander läßt sich nicht an verschiedene Käfigverhältnisse anpassen und die Haken brechen leicht ab.

Eine weitere Aufgabe der Erfindung ist es somit, ein Vogel-Badehaus der eingangs genannten Art zu schaffen, bei dem der Sitz des Hakens an der Dachteil-Decke entlang dem vorderen Rand in einem erheblichen Maß variiert werden kann und der Haken dennoch bruchfest an dem Dach sitzt. Die Erfindung ist, diese Aufgabe lösend, dadurch gekennzeichnet, daß an der Decke des Dachteiles an dem die Durchlaß-Öffnung begrenzenden vorderen Rand zwei Haken zum Anhängen vorgesehen sind, jeder Haken an einem Fuß mit glattem Klemmschlitz befestigt ist und der Haken-Fuß über den Decken-Rand geschoben an der Decke alleine durch Klemmung sitzt und ein Vielfaches der Länge des Decken-Randes in der Dicke an die Weite des Klemmschlitzes angepaßt ist.

Die Verbindung des Hakens mit dem Fuß und des Fußes mit der Decke ist in einem erheblich verbesserten Umfang bruchfest. Auch läßt sich jeder der beiden Haken entlang dem Deckenrand an einer Vielzahl von Stellen aufschieben und somit an die jeweiligen Käfigverhältnisse anpassen. Der Fuß sitzt ohne Verrastung mittels Nasen, die in Ausnehmungen ragen, alleine mittels Klemmung.

Besonders zweckmäßig und vorteilhaft ist es, wenn der vordere Randstreifen der Dachteil-Decke über die gesamte Länge und Breite gleichbleibende Dicke aufweist. Die beiden Haken lassen sich an jeder beliebigen Stelle des Randstreifens der Decke aufschieben.

Besonders zweckmäßig und vorteilhaft ist es auch, wenn der Haken oben auf dem Fuß, d. h. einer Flachseite des Fußes sitzt. Da der Haken nicht am vorderen Stirnende des Fußes sitzt, ist die Bruchfestigkeit weiter erhöht.

Besonders zweckmäßig und vorteilhaft ist es auch, wenn an einer zum Klemmschlitz parallelen Flachseite des Fußes eine Stabilisierungsrippe vorgesehen ist. Dies verbessert die Festigkeit und Klemmung des Fußes.

Besonders zweckmäßig und vorteilhaft ist es sodann, wenn der Klemmschlitz im Fuß in einer abgerundeten Verbreiterung endet. Hierdurch werden Kerbspannungen vermieden, die bei einem stärkeren Spreizen der den Klemmschlitz begrenzenden Schenkel zum Bruch führen könnten.

Besonders zweckmäßig und vorteilhaft ist es weiterhin, wenn die Klemmflächen des Klemmschlitzes leicht ballig gestaltet sind. Dies erleichtert das Aufsetzen des Haken-Fußes auf die Dachteil-Decke.

Besonders zweckmäßig und vorteilhaft ist es noch, wenn der Haken von nahe dem Fuß bis kurz vor dem freien Ende mit einer Höhlung versehen ist. Hierdurch ist der Haken leichter, ohne daß die Festigkeit leidet.

In der Zeichnung ist eine bevorzugte Ausführungsform der Erfindung dargestellt und zeigt

Fig. 1 eine Vorderansicht eines Dachteiles eines Vogel-Badehauses,

Fig. 2 eine Vorderansicht des Wannenteiles des Badehauses gemäß Fig. 1,

Fig. 3 einen Längsschnitt des Badehauses gemäß Fig. 1 und 2,

Fig. 4 eine Draufsicht auf den Wannenteil gemäß Fig. 2,

Fig. 5 einen Längsschnitt des Dachteiles gemäß Fig. 1,

Fig. 6 eine Draufsicht auf das Badehaus gemäß Fig. 1 und 2 und

Fig. 7 eine Draufsicht auf ein Vogel-Badehaus, das etwas anders als gemäß Fig. 1 und 2 ausgebildet ist.

Das Vogel-Badehaus gemäß Zeichnung besteht aus zwei voneinander unabhängigen Teilen aus Kunststoff, nämlich einem Dachteil 1 und einem Wannenteil 2. Es ist in einem waagerechten Querschnitt in etwa rechteckig. Der Wannenteil 2 ist rundum gleichmäßig von gleichhohen Wandungen abgeschlossen und eine Durchlaß-Öffnung 3 ist vollständig im Dachteil vorgesehen und bildet dessen Vorderseite. Die Rückseiten des Dachteiles und des Wannenteiles sind gegenüber einer Senkrechten leicht schräg gegenläufig geneigt, so daß der waagerechte Querschnitt des Badehauses im Bereich der Stoßstelle von Dach- und Wannenteil am größten ist.

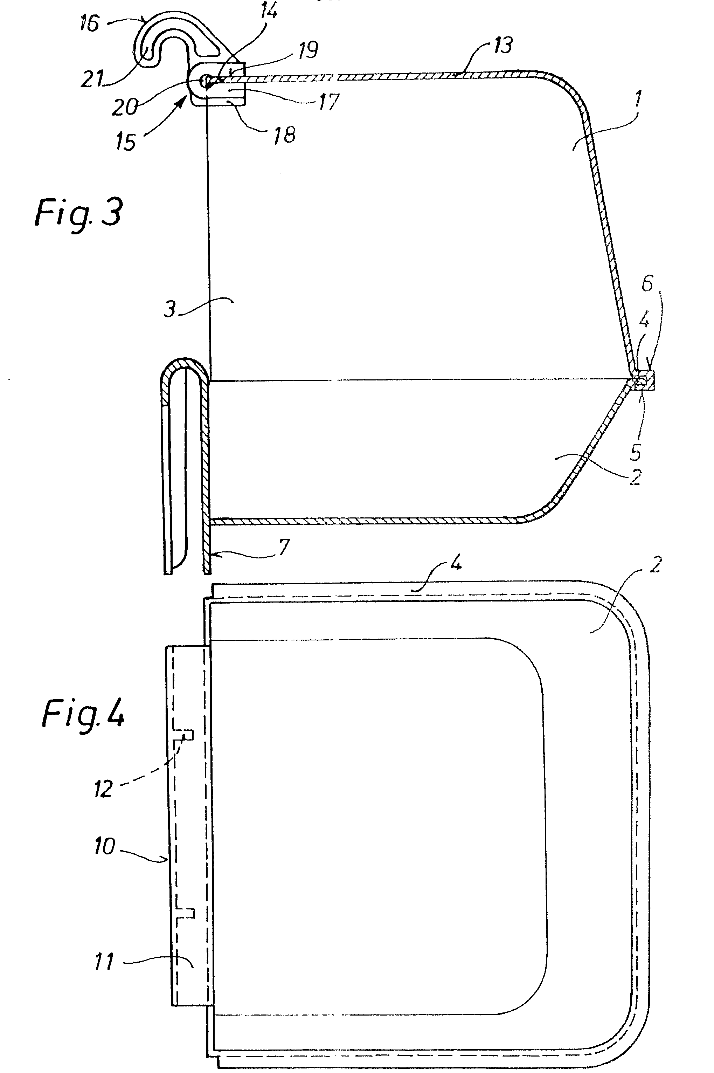

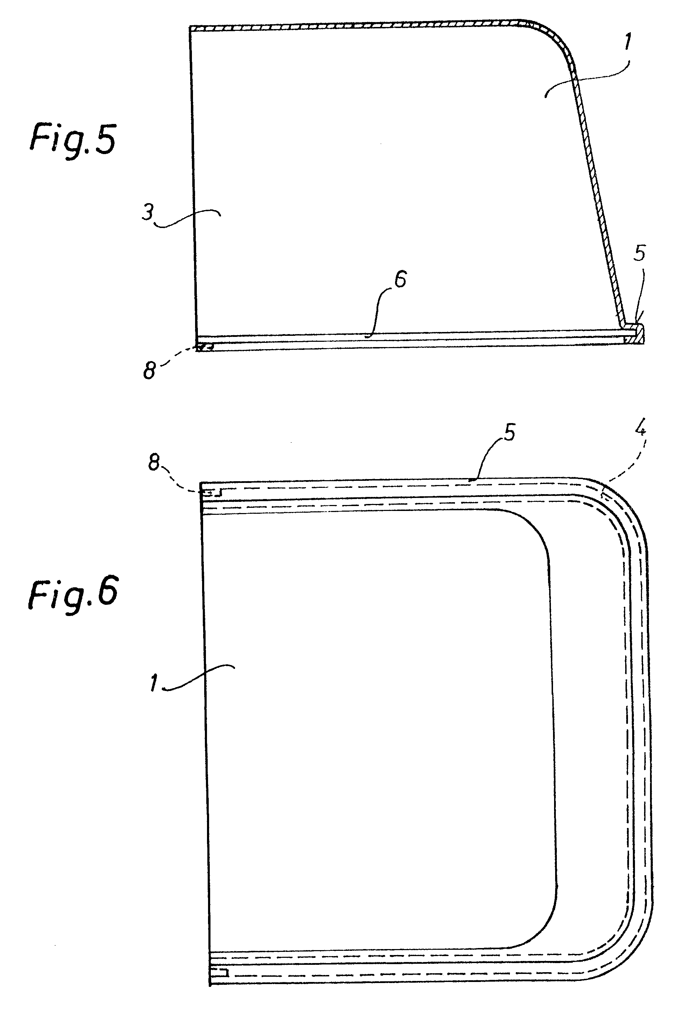

Der Wannenteil 2 weist an seinem oberen Rand entlang den beiden Längsseiten und der Rückseite durchgehend einen um 90° gegenüber der Wandung des Wannenteiles nach außen abgewinkelten Führungssteg 4 auf. Der Dachteil 1 weist entlang seinem unteren Rand an beiden Längsseiten und an der Rückseite durchgehend eine um 90° gegenüber der Wandung des Dachteiles nach außen abgewinkelte Nutrinne 5 auf, die eine Führungsnut 6 bildet, in welche gemäß Fig. 3 und 6 der Führungssteg 4 eingeschoben ist. Der Führungssteg 4 füllt die Führungsnut 6 der Tiefe nach völlig aus, so daß Dachteil und Wannenteil nicht gegeneinander wackeln können.

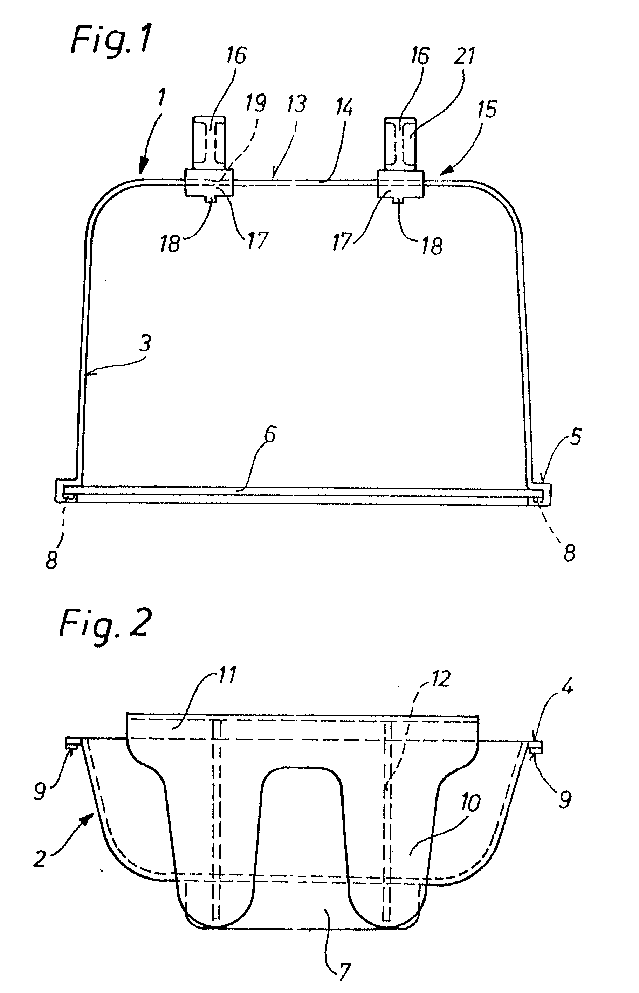

Ganz kurz vor dem vorderen Ende der beiden seitlichen Bereiche des Führungssteges 4 ist in jedem der seitlichen Bereiche eine Rastausnehmung 8 vorgesehen, deren Tiefe maximal der halben Tiefe bzw. Breite des Steges entspricht. In der unteren Wandung der Führungsnut 6 ist nahe jedem der beiden vorderen Enden eine Rastausnehmung 8 vorgesehen, wie Fig. 1 und 6 erkennen lassen. Die relativ flache bzw. niedrige Rastnase läßt sich, unter elastischer Biegung der Seitenwandungen des Dachteiles 1 und der Wandungen der Führungsnut, wegen der Abrundung relativ leicht wieder aus der Rastausnehmung herausziehen.

An der Vorderseite des Wannenteiles 2 sind zwei breite, laschenartige Haken 10 mit Abstand voneinander vorgesehen, die oben zum Biegungsbereich 11 hin ineinander übergehen. Der Biegungsbereich 11 ist an der Oberseite geriffelt, um den Vögeln bei Start und Landung sicheren Halt zu geben. Die beiden Haken 10 ragen über den Boden des Wannenteiles 2 beachtlich nach unten hinaus. Parallel zu dem hinausragenden Teil der Haken, der etwa ein Viertel der Gesamtlänge des Hakens ausmacht, ragt eine Abstützleiste 7 quer über die Breite der Vorderseite des Wannenteiles nach unten. An der Innenseite beider Haken 10 ist jeweils mittig ein vorragender Sims 12 vorgesehen.

Der Dachteil 1 besitzt oben eine Decke 13, die durchgehend gleich dick ist, also auch über einen vorderen Randstreifen 14 hin gleich dick ist. Auf diesen Randstreifen 14 sind mit Abstand voneinander zwei Haken 15, die jeweils aus einem Hakenglied 16 und einem Fuß 17 bestehen, aufgeschoben. Der Fuß 17 ist in etwa rechteckig und besitzt an der oberen Fläche eine in Einschubrichtung verlaufende mittige Verstärkungsrippe 18.

Der Fuß 17 ist über den größten Teil seiner rechtwinkelig zum Randstreifen 14 verlaufenden Abmessung in waagerechter Ebene mittig von einem Klemmschlitz 19 geteilt, in den der Randstreifen 14 eingeklemmt ist und dessen Breite bei abgezogenem Fuß geringer als die Dicke des Randstreifens ist. Der Klemmschlitz 19 endet in einer abgerundeten Verbreiterung 20, die parallel zur vorderen Kante der Decke 13 verläuft. Die den Klemmschlitz 17 begrenzenden beiden Schenkelteile, die gegeneinander elastisch biegsam sind, bilden jeweils ballige bzw. abgerundere Klemmflächen, die an dem Randstreifen 14 anliegen.

Der Fuß 17 trägt an der Oberseite das Hakenglied 16, das in Richtung der vorderen Decken-Kante schmäler ist als der Fuß und sich rechtwinkelig zur vorderen Decke-Kante etwa über den ganzen Fuß erstreckt. Die rechtwinkelig zur Dekke-Kante verlaufende Abmessung des Hakengliedes 16 verjüngt sich vom Fuß weg zur Mitte des Hakengliedes hin. Das Hakenglied 16 weist an beiden Seiten je eine Höhlung 21 auf, die sich fast über die gesamte Länge des Hakengliedes erstreckt.

Der gesamte Haken besteht aus einem steif elastischen Kunststoff hoher Festigkeit, z. B. einem schlag- oder hochschlagfesten Polystyrol. Das Badehaus ist frei von Zusatzeinrichtungen, elektrischen Einrichtungen, Pumpen oder sonstigen Ergänzungen und damit sehr leicht.

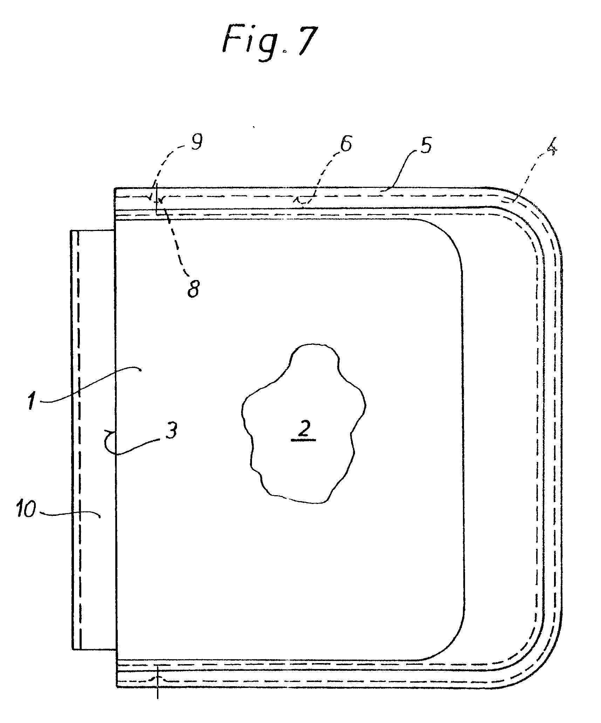

Bei der Ausführungsform gemäß Fig. 7 ist die Rastausnehmung 8 im Führungssteg 4 und die Rastnase 9 am Grund der Führungsnut 6 vorgesehen. Rastnase 9 und Rastausnehmung 8 sind jeweils teilkreisförmig abgerundet.

**Patentansprüche**

1. Vogel-Badehaus, das an der mit der Durchlaß-Öffnung versehenen Vorderseite Haken (10) zum Anhängen an einem Käfig aufweist und bei dem ein Dachteil (1) auf ein Wannenteil (2) aufgesetzt ist, dadurch gekennzeichnet, daß das Dachteil (1) mit beidseitiger Führungsnut (6) auf beidseitigem Führungssteg (4) des Wannenteiles (2) von hinten aufgeschoben ist, im Bereich von Führungsnut und Führungssteg eine, Rastausnehmung und Rastnase umfassende Rasteinrichtung vorgesehen ist, die Haken (10) zum Aufhängen unterhalb der Durchlaß-Öffnung (3) am Wannenteil (2) vorgesehen sind, der Führungssteg (4) samt Führungsnut (6) in eine seitliche, nach außen weisende Lage umgelegt ist und Rastnase (9) sowie Rastausnehmung (8) an einer Flachseite des Führungssteges (4) und einer Wandung der Führungsnut (6) oder an der Stirnseite des Führungssteges (4) und dem Grund der Führungsnut (6) vorgesehen sind.

2. Vogel-Badehaus nach Anspruch 1, dadurch gekennzeichnet, daß der obere Rand des Wannenteiles (2) rundum in Höhe des unteren Randes der Durchlaß-Öffnung (3) verläuft und die Biegung (11) der Haken (10) den unteren Rand der Durchlaß-Öffnung (3) nach oben überragt.

3. Vogel-Badehaus nach Anspruch 1 oder 2, dadurch gekennzeichnet, daß Führungsnut (6) und Führungssteg (4) sich ununterbrochen über beide Längsseiten und die Rückseite von Wannenteil (2) und Dachteil (1) erstrecken.

4. Vogel-Badehaus nach Anspruch 1, 2 oder 3, dadurch gekennzeichnet, daß die Wandungen von Dachteil (1) und Wannenteil (2) innen fluchtend ineinander übergehen und eine die Führungsnut (6) bildende Nutrinne (5) die Wandung des Dachteiles (1) nach außen überragt.

5. Vogel-Badehaus nach einem der vorhergehenden Ansprüche, dadurch gekennzeichnet, daß die Rastausnehmung (8) im Führungssteg (4) und die Rastnase (9) am Grund der Führungsnut (6) vorgesehen ist.

6. Vogel-Badehaus nach einem der vorhergehenden Ansprüche 1 bis 4, dadurch gekennzeichnet, daß die Rastnase am Führungssteg (4) und die Rastausnehmung an der Wandung der Führungsnut (6) vorgesehen ist.

7. Vogel-Badehaus nach einem der vorhergehenden Ansprüche, dadurch gekennzeichnet, daß an beiden Längsseiten nahe bei der Vorderseite je eine Rasteinrichtung (8, 9) vorgesehen ist.

8. Vogel-Badehaus nach einem der vorhergehenden Ansprüche, dadurch gekennzeichnet, daß die Haken (10) die Vorderseite des Wasserteiles (2) nach unten überragen und am Wannenteil (2) eine parallel zum Haken (10) nach unten ragende Stützleiste (7) vorgesehen ist.

9. Vogel-Badehaus nach einem der vorhergehenden Ansprüche, dadurch gekennzeichnet, daß die Außenseite des Wannenteiles (2) mit einer durch Metallisieren aufgebrachten metallischen dünnen Belagsschicht versehen ist.

10. Vogel-Badehaus nach einem der vorhergehenden Ansprüche, dadurch gekennzeichnet, daß an der Decke (13) des Dachteiles (1) an dem die Durchlaß-Öffnung (3) begrenzenden vorderen Rand zwei Haken (15) zum Anhängen vorgesehen sind, jeder Haken (15) an einem Fuß (17) mit glattem Klemmschlitz (19) befestigt ist und der Haken-Fuß über den Decken-Rand geschoben an der Decke (13) alleine durch Klemmung sitzt und ein Vielfaches der Länge des Decken-

Randes (14) in der Dicke an die Weite des Klemmschlitzes (19) angepaßt ist.

11. Vogel-Badehaus nach Anspruch 10, dadurch gekennzeichnet, daß der vordere Randstreifen (14) der Dachteil-Decke (13) über die gesamte Länge und Breite gleichbleibende Dicke aufweist.

12. Vogel-Badehaus nach Anspruch 10 oder 11, dadurch gekennzeichnet, daß der Haken (15) oben auf dem Fuß (14), d. h. an einer Flachseite des Fußes sitzt.

13. Vogel-Badehaus nach Anspruch 10, 11 oder 12, dadurch gekennzeichnet, daß an einer zum Klemmschlitz (19) parallelen Flachseite des Fußes (17) eine Stabilisierungsrippe (18) vorgesehen ist.

14. Vogel-Badehaus nach einem der vorhergehenden Ansprüche 10 bis 13, dadurch gekennzeichnet, daß der Klemmschlitz (19) im Fuß (17) in einer abgerundeten Verbreiterung (20) endet.

15. Vogel-Badehaus nach einem der vorhergehenden Ansprüche 10 bis 14, dadurch gekennzeichnet, daß die Klemmflächen des Klemmschlitzes (19) leicht ballig gestaltet sind.

16. Vogel-Badehaus nach einem der vorhergehenden Ansprüche 10 bis 15, dadurch gekennzeichnet, daß der Haken (15) von nahe dem Fuß (17) bis kurz vor dem freien Ende mit einer Höhlung (21) versehen ist.

**Claims**

1. A bird bath which has hooks 10 for attachment to a cage and which is provided with an entrance opening on the front side, and in which a roof section 1 is disposed on a tub section 2, characterised in that the roof section 1 with a guide groove 6 on both sides is pushed from behind on to a guide flange 4 on both sides of the section 2, an engagement device comprising an engagement catch is provided in the area of the guide groove and guide flange, in that the hooks for attachment 10 are privided below the entrance-opening 3 in the tub section 2, the guide flange 4 together with the guide groove is directed laterally outwards and both the engagement catch 9 and the engagement recess 8 are provided on a flat side of the guide flange 4 and on a wall of the guide groove 6 or at the front end of guide flange 4 and at the base of the guide groove 6.

2. A bird bath according to claim 1, characterised in that the upper edge of the tub section 2 extends round at the height of the lower edge of the entrance-opening 3 and the curvature 11 of the hooks 10 projects beyond the lower end of the entrance-opening 3 at the top.

3. A bird bath according to claim 1 or 2, characterised in that the guide groove 6 and guide flange 4 extend uninterruptedly along both longitudinal sides and the rear end of the tub section 2 and roof section 1.

4. A bird bath according to claim 1, 2 or 3, characterised in that the walls of the roof section 1 and tub section 2 pass in to one another in internal alignment and a trough 5 which forms the guide groove 6 projects outwards beyond the wall of the roof section 1.

5. A bird bath according to one of the preceding claims 1 to 4, characterised in that the engagement recess 8 is provided in the guide flange 4 and the engagement catch 9 is provided at the base of the guide groove 6.

6. A bird bath according to one of the preceding claims 1 to 4, characterised in that the engagement catch is provided on the guide flange 4 and the engagement recess is provided on the wall of the guide groove 6.

7. A bird bath according to one of the preceding claims, characterised in the one engagement device 8, 9 is provided on each of the two longitudinal sides adjacent to the front end.

8. A bird bath according to one of the preceding claims, characterised in that the hooks 10 project beyond the front end of the water section at the bottom and a supporting strip 7 projecting downwards parallel to the hook 10 is provided on the tub section 2.

9. A bird bath according to one of the preceding claims, characterised in that the outside of the tub section 2 is provided with a thin metal coating layer applied by metallisation.

10. A bird bath according to one of the preceding claims, characterised in that two hooks for attachment 15 are provided on the cover of the roof section 1 on the front edge which encloses the entrance-opening 3, each hook 15 is secured to a foot 17 with a smooth clamping slot 19 and the foot of the hook is pushed over the cover edge of the cover 13, held by clamping alone and a multiple of the length of the roof edge 14 is adjusted in thickness to the width of the clamping slot 19.

11. A bird bath according to claim 10, characterised in that the front edge strip 14 of the roof section cover 13 has a constant thickness throughout its entire length and breadth.

12. A bird bath according to claim 10 or 11, characterised in that the hook 15 is held at the top on the foot 14 sic, i. e. on a flat side of the foot.

13. A bird according to claim 10, 11 or 12, characterised in that a stabiliser rib 18 is provided on a flat side of the foot 17 parallel to the clamping slot 15.

14. A bird bath according to one of the preceding claims 10 to 13, characterised in that the clamping slot 19 in the foot 17 terminates in a rounded enlargement 20.

15. A bird bath according to one of the preceding claims 10 to 14, characterised in that the clamping surfaces of the clamping slot 19 are slightly convex in construction.

16. A bird bath according to one of the preceding claims 10 to 15, characterised in that the hook 15 is provided with a hollow recess 21 which extends from close to the foot 17 to shortly before the free end.

## Revendications

1. Maisonnette de bain pour oiseaux, qui présente sur le côté avant, pourvu de l'ouverture de passage, des crochets (10) pour la suspension à une cage et qui comprend une partie supérieure (1) montée sur une partie formant cuvette (2), caractérisée en ce que la partie supérieure (1) présente sur les deux côtés une rainure de guidage (6) par laquelle elle est glissée de l'arrière sur une nervure de guidage (4) prévue sur les deux côtés de la cuvette (2), qu'un dispositif de verrouillage comprenant une encoche et un ergot est prévu dans la région de la rainure et de la nervure de guidage, que les crochets (10) pour la suspension sont prévus au-dessous de l'ouverture de passage (3) sur la cuvette (2), que la nervure de guidage (4) et la rainure de guidage (6) sont rabattues vers l'extérieur en une position latérale et que l'ergot (9) et l'encoche (8) sont prévus sur un côté plat de la nervure de guidage (4) et sur un flanc de la rainure de guidage (6), ou sur le côté extérieur de la nervure (4) et le fond de la reinure (6).

2. Maisonnette selon la revendication 1, caractérisée en ce que le bord supérieur de la cuvette (2) s'étend tout autour à la hauteur du bord inférieur de l'ouverture de passage (3) et que la portion courbe (11) des crochets (10) fait saillie vers le haut par rapport au bord inférieur de l'ouverture de passage (3).

3. Maisonnette selon la revendication 1 ou 2, caractérisée en ce que la rainure de guidage (6) et la nervure de guidage (4) sont continues sur les deux côtés longitudinaux et sur le côté arrière de la cuvette (2) et de la partie supérieure (1).

4. Maisonnette selon la revendication 1, 2 ou 3, caractérisée en ce que les parois de la partie supérieure (1) et de la cuvette (2) se raccordent intérieurement les unes aux autres et qu'une bordure creuse (5) formant la rainure de guidage (6) fait saillie vers l'extérieur par rapport à la paroi de la partie supérieure (1).

5. Maisonnette selon l'une des revendications précédentes, caractérisée en ce que l'encoche (8) est prévue dans la nervure de guidage (4) et l'ergot (9) sur le fond de la rainure de guidage (6).

6. Maisonnette selon l'une des revendications 1 à 4, caractérisée en ce que l'ergot est prévu sur la nervure de guidage (4) et l'encoche dans un flanc de la rainure de guidage (6).

7. Maisonnette selon l'une des revendications précédentes, caractérisée en ce qu'un dispositif de verrouillage (8, 9) est prévu sur chacun des deux côtés longitudinaux, près du côté avant.

8. Maisonnette selon l'une des revendications précédentes, caractérisée en ce que les crochets (10) font saillie vers le bas par rapport au côté avant de la cuvette (2) et qu'une réglette d'appui (7), dirigée vers le bas, est disposée parallèlement aux crochets (10) sur la cuvette (2).

9. Maisonnette selon l'une des revendications précédentes, caractérisée en ce que le côté extérieur de la cuvette (2) est pourvu d'une mince couche de revêtement métallique appliquée par métallisation.

10. Maisonnette selon l'une des revendications précédentes, caractérisée en ce que deux crochets (15) pour la suspension sont prévus sur le bord avant, délimitant l'ouverture de passage (3), du toit (13) de la partie supérieure (1), chaque crochet (15) étant fixé à un pied (17) possédant une fente de serrage (19) à faces lisses, le pied de crochet étant glissé sur le bord du toit (13), où il est maintenu en place par serrage uniquement, et que le toit (13) possède une épaisseur qui est adaptée à la largeur de la fente de serrage (19) sur une longueur correspondant à un multiple de la portion avant (14) du toit sur laquelle sont fixés les crochets.

11. Maisonnette selon la revendication 10, caractérisée en ce que la portion avant (14) du toit (13) possède une épaisseur constante sur toute la longueur et toute la largeur.

12. Maisonnette selon la revendication 10 ou 11, caractérisée en ce que le crochet (15) est disposé sur le dessus, c'est-à-dire sur un côté plat du pied (17).

13. Maisonnette selon la revendication 10, 11 ou 12, caractérisée en ce qu'une nervure de raidissement (18) est prévue sur un côté plat du pied (17) orienté parallèlement à la fente de serrage (19).

14. Maisonnette selon l'une des revendications 10 à 13, caractérisée en ce que la fente de serrage (19) dans le pied (17) se termine par un élargissement arrondi (20).

15. Maisonnette selon l'une des revendications 10 à 14, caractérisée en ce que les faces de serrage de la fente (19) sont légèrement bombées.

16. Maisonnette selon l'une des revendications 10 à 15, caractérisée en ce que le crochet (15) est pourvu d'un creux (21) à partir d'un point situé près du pied (17) jusqu'à une faible distance de l'extrémité libre.

*Fig.1*

*Fig.2*

Fig. 3

Fig. 4

*Fig.5*

*Fig.6*

11

# Fig. 7